# EUROPÄISCHE PATENTSCHRIFT

(11) **EP 1 940 618 B1**
(45) Veröffentlichungstag und Bekanntmachung des Hinweises auf die Patenterteilung: **17.08.2016**
(21) Anmeldenummer: 06806476.5
(22) Anmeldetag: 24.10.2006
(51) Int. Cl.: B32B 27/08, B44C 1/17, B32B 27/10

(54) **VERFAHREN ZUM TRANSFER EINES MEHRSCHICHTKÖRPERS SOWIE TRANSFERFOLIE**
METHOD FOR TRANSFERRING A MULTILAYER BODY AND A TRANSFER FILM
PROCEDE DE TRANSFERT D'UN CORPS MULTICOUCHE ET FEUILLE DE TRANSFERT

(30) Priorität: 27.10.2005 DE 102005051725
(43) Veröffentlichungstag der Anmeldung: 09.07.2008
(73) Patentinhaber: OVD Kinegram AG, 6301 Zug (CH)
(72) Erfinder: STREB, Christina, CH-5646 Abtwil (CH); ESCHENMOSER, Felix, Alex, CH-6204 Sempach LU (CH); SCHMIDLIN, Hans-Jörg, Alois, CH- 6102 Malters LU (CH); HANSEN, Achim, CH-6300 Zug (CH)
(74) Vertreter: Zinsinger, Norbert
(86) Internationale Anmeldenummer: PCT/EP2006/010208
(87) Internationale Veröffentlichungsnummer: WO 2007/048563

(56) Entgegenhaltungen:
- EP-A- 1 319 502
- EP-A2- 0 416 618
- WO-A-97/30855
- DE-A1- 19 813 314
- DE-A1- 19 940 790
- US-A- 4 232 077

## Beschreibung

Die Erfindung betrifft ein Verfahren zum Transfer eines Mehrschichtkörpers auf ein Substrat, ein Verfahren zur Herstellung einer Transferfolie sowie eine mittels dieses Verfahrens hergestellte Transferfolie.

Zum Transfer von Sicherheits- und/oder Identifikationselementen auf Sicherheitsdokumente, beispielsweise Reispässe oder Kreditkarten, werden im grossen Umfang Prägefolien, insbesondere Heissprägefolien eingesetzt. So beschreibt beispielsweise DE 100 13 410 A1 die Herstellung eines Laminats, das einen Ausweis, eine Kreditkarte oder dergleichen bildet, bei dem zwischen zwei benachbarten Decklagen ein Sicherheits- und/oder Identifikationselement eingebracht wird, das von der Dekorschicht einer Heissprägefolie gebildet wird. Das Sicherheitselement umfasst eine transparente Lack- oder Polymerschicht, in die beugungsoptisch wirksame Strukturen appliziert sind. Die transparente Lack- oder Polymerschicht ist mit einer die Reflexion erhöhenden Schicht versehen, bei der es sich um eine Metallschicht oder eine dielektrische Schicht handeln kann. Weiter weist das Sicherheitselement eine Kleberschicht auf, mittels der das Sicherheitselement an der unteren Decklage festgelegt ist. Die Aufbringung des Sicherheitselements auf die untere Decklage erfolgt derart, dass die Heissprägefolie mit der Kleberschicht auf die entsprechende Seite der unteren Decklage aufgelegt wird und unter Einwirkung von Wärme und Druck in dem Teilbereich der Heissprägefolie an die Decklage angepresst wird, der zu transferieren ist. Beim Abziehen des Trägerfilms haftet dann der Teilbereich der Dekorlage der Heissprägefolie, der das Sicherheitselement bilden soll, an der unteren Decklage fest. Die übrigen Teilbereiche der Dekorlage werden zusammen mit dem Trägerfilm abgezogen. Das Anpressen der Heissprägefolie erfolgt hier mittels eines entsprechend strukturierten Werkzeuges, das nur dort, wo später das Sicherheitselement vorhanden sein soll, entsprechenden Druck auf die Heissprägefolie ausübt.

Bei einer derartigen Übertragung der Dekorlage einer Heissprägefolie von einem Trägerfilm auf ein Substrat wird im allgemeinen die Dekorlage der Prägefolie entlang des Randes des zu übertragenden Teilbereiches der Dekorlage beim Abziehen der Transferfolie von dem Substrat abgerissen. Dies kann insbesondere bei der Verwendung von Tranferfolien mit dickeren Schichten oder mit Schichten mit speziellen Eigenschaften, wie z.B. mit hoher Abriebfestigkeit, zu Problemen führen.

So schlägt EP 0 708 935 A1 vor, aus einer Heissprägefolie bestehend aus einem Polyesterträger, einem ein Hologramm enthaltenden optischen Element, einer Schutzschicht und einer Kleberschicht eine Marke auszuschneiden und auf einen überragenden Kleberfilm aufzukleben. Die Marke bildet das zu übertragende optische Element. Auf den Trägerfilm wird so ein bereits die Form des zu übertragenden Elements aufweisender Mehrschichtkörper vorgesehen. Der Trägerfilm überragt den Mehrschichtkörper und dient zur Positionierung des Mehrschichtkörpers auf dem Substrat.

Diese Verfahren besitzen jedoch den Nachteil, dass ein Ausschneiden einer Marke aus einer Transfer- oder Laminierfolie und das anschliessende Kaschieren derselben auf einem überragenden Träger technisch sehr aufwendig ist und ein passergenaues Positionieren der Marke auf dem Träger nur mit hohem technologischen Aufwand möglich ist. Zudem steht bei diesem Verfahren eine gewöhnlich außerhalb des zu übertragenden Bereichs liegende optische Markierung nicht mehr zur Verfügung.

Weiterhin Offenbart die WO97/30855 A eine Prägefolie und ein Verfahren zu derem Hestellung.

Der Erfindung liegt nun die Aufgabe zugrunde, ein verbessertes Verfahren zum Transfer eines Mehrschichtkörpers auf ein Substrat sowie eine hierfür geeignete Transferfolie anzugeben.

Diese Aufgabe wird mit dem in Anspruch 1 definierten Verfahren zum Transfer eines Mehrschichtkörpers auf ein Substrat gelöst.

Diese Aufgabe wird weiter mit dem in Anspruch 14 definierten Verfahren zur Herstellung einer Transferfolie und einer mittels dieses Verfahrens hergestellten Transferfolie gelöst.

Mittels der Ablösefolie und der partiellen Aktivierung der Kleberschicht wird die Dekorlage vor dem Transfer des Mehrschichtkörpers in den Teilbereichen von dem Trägerfilm entfernt, die später nicht auf das Substrat transferiert werden sollen. Damit ist es beispielsweise möglich, den Mehrschichtkörper mittels eines kostengünstigen und einfach aufgebauten Rollenlaminators auf ein Substrat, beispielsweise einen Reisepass, zu transferieren. Weiter ist es so möglich, ein durch das Brechen der Dekorlage im Randbereich des zu transferierenden Mehrschichtkörpers entstehendes "Ausfransen" zu vermeiden. Die Haft- und Struktureigenschaften der Ablösefolie können unabhängig von sonstigen Anforderungen, denen beispielsweise das Ziel-Substrat unterliegt, so optimiert werden, dass die Dekorlage in den Randbereichen beim Abziehen der Ablösefolie glatt durchbricht und keine störenden Effekte mehr auftreten.

Hierbei ist es auch möglich, dass der erste Teilbereich der Dekorlage nur bereichsweise auf das Substrat transferiert wird, beispielsweise eine erste "kritische" Kante des zu transferierenden Mehrschichtkörpers mittels der Ablösefolie generiert wird und eine zweite Kante mittels eines Prägestempels oder einer strukturierten Rolle eines Rollenlaminators generiert wird.

Die zwischen Dekorlage und Ablösefolie angeordnete erste Kleberschicht wird partiell aktiviert und partiell deaktiviert, wobei durch entsprechende Wahl der Kleberschicht und der Ablösefolie in dem zweiten Teilbereich der Dekorlage, in dem die Kleberschicht aktiviert ist, eine Haftung zwischen Dekorlage und Ablöseschicht bewirkt wird, die grösser als die Haftung zwischen Trägerfilm und Dekorlage ist. Die Ablöseschicht und die Kleberschicht werden weiter so gewählt, dass im ersten Teilbereich der Dekorlage, in dem die Kleberschicht deaktiviert ist, die Haftung zwischen Dekorlage und Ablöseschicht kleiner als die Haftung zwischen Trägerfilm und Dekorlage ist.

Gemäß eines bevorzugten Ausführungsbeispiels der Erfindung ist der erste Teilbereich der Dekorlage, welche auf das Substrat zu applizieren ist, von einem zweiten Teilbereich der Dekorlage umschlossen bzw. umrandet, welche mit der Ablösefolie von dem Trägerfilm abgezogen wird. Dieser zweite Teilbereich der Transferfolie ist dann weiter bevorzugt von einem dritten Teilbereich der Dekorlage umschlossen bzw. umrandet, der nicht mit der Ablösefolie von dem Trägerfilm abgelöst wird und vorzugsweise auch beim Applizieren des ersten Teilbereiches der Dekorlage auf das Substrat noch auf dem Trägerfilm verbleibt. So ist es beispielsweise möglich, dass der auf das Substrat zu applizierende erste Teilbereich der Dekorlage eine den Umfangrand des ersten Teilbereiches umschließenden Korridor einer Breite von bevorzugt 2 bis 10 mm bildet, welche den ersten Teilbereich von dem dritten Teilbereich der Dekorlage trennt. In diesem Fall kann der erste Teilbereich der Dekorlage beispielsweise mittels eines Prägestempels oder einer entsprechend strukturierten Rolle eines Rolllaminators auf das Substrat appliziert werden. Der dritte Teilbereich kann hierbei weiter mit optischen Marken versehen sein, welche beispielsweise für die registergenaue Applizierung des ersten Teilbereiches der Dekorlage verwendet werden.

Vorzugsweise wird als Ablösefolie eine Folie aus einem Papiermaterial verwendet. Ein solches Material verfügt über gute Hafteigenschaften und ist äusserst preisgünstig.

Gemäss der Erfindung wird die erste Kleberschicht im ersten und zweiten Teilbereich vollflächig auf die Dekorlage aufgebracht und vor dem Abziehen der Ablösefolie partiell im zweiten Teilbereich aktiviert. Diese Aktivierung kann vorzugsweise mittels eines beheizten Prägestempels erfolgen, der die Heisskleberschicht mittels Hitze und Druck im zweiten Bereich, jedoch nicht im ersten Bereich, aktiviert. Weiter ist es auch möglich, dass als erste Kleberschicht ein UV-aktivierbarer Kleber im ersten und zweiten Teilbereich vollflächig auf die Dekorlage aufgebracht wird und mittels UV-Bestrahlung partiell im zweiten Bereich, jedoch nicht im ersten Bereich, aktiviert wird. Als erste Kleberschicht ist so die Kleberschicht verwendbar, die dann auch in dem später folgenden Transferschritt die Festlegung des transferierten Mehrschichtkörpers auf dem Substrat bewirkt. Dies führt zu einer besonders kostengünstigen Lösung, da die erste Kleberschicht sowohl für das partielle Ablösen der Dekorlage in dem zweiten Teilbereich als auch für das Festlegen des transferierten Mehrschichtkörpers auf dem Ziel-Substrat verwendet wird. Durch dieses Verfahren ergibt sich dann auch weiter der Vorteil, dass zur Festlegung des Mehrschichtkörpers auf dem Ziel-Substrat ein den ersten Teilbereich der Dekorlage überragender Heissprägestempel oder ein von zwei gegenüber liegenden, beheizten Rollen gebildeter Rollenlaminator verwendet werden kann, wodurch auch ein festes Anhaften der Randbereiche des Mehrschichtkörpers an dem Substrat gewährleistet werden kann.

Gemäss einer Alternative der Erfindung wird die erste Kleberschicht im ersten Teilbereich mittels Überdruck einer Deaktivierungsschicht, beispielsweise einer Lackschicht, deaktiviert. Weiter ist es möglich, dass die erste Kleberschicht auf die Dekorlage oder die Ablösefolie im zweiten Teilbereich, jedoch nicht im ersten Teilbereich, aufgedruckt wird. Hierdurch wird es ermöglicht, dass die Ablösefolie mittels zweier gegenüberliegender Rollen auf die Transferfolie auflaminiert werden kann und auf die Verwendung von Heissprägestempeln verzichtet werden kann.

Vorzugsweise wird dann zwischen Dekorlage und Ablösefolie neben der ersten Kleberschicht noch eine zweite Kleberschicht vorgesehen. Es ist hierbei möglich, dass die zweite Kleberschicht auf die Dekorlage und die erste Kleberschicht auf die Ablösefolie aufgebracht werden oder dass zuerst die zweite Kleberschicht auf die Dekorlage aufgebracht wird und dann die erste Kleberschicht auf die zweite Kleberschicht aufgebracht wird.

Für die erste und zweite Kleberschicht werden hierbei vorzugsweise unterschiedliche Kleber verwendet. So werden für die erste und zweite Kleberschicht jeweils Heisskleber verwendet, die jedoch unterschiedliche Aktivierungstemperaturen besitzen. Als erste Kleberschicht wird eine Kleberschicht mit einer Aktivierungstemperatur verwendet, die geringer als die Aktivierungstemperatur der zweiten Kleberschicht ist. So ist es möglich, die erste Kleberschicht partiell zu aktivieren, ohne die zweite Kleberschicht zu aktivieren. Weiter ist es auch möglich, dass für die erste Kleberschicht ein Kaltkleber oder ein UV-aktivierbarer Kleber und für die zweite Kleberschicht ein Heisskleber verwendet wird.

Gemäss eines bevorzugten Ausführungsbeispiels der Erfindung wird die Dekorlage und eventuell weitere in der Transferlage vorliegende Schichten (erste und zweite Kleberschicht) in Randbereichen des ersten Teilbereiches, in denen der erste und der zweite Teilbereich aneinander grenzen, zumindest bereichsweise durchtrennt. Das Durchtrennen dieser Schichten kann hierbei vor oder nach dem Auflegen der Ablösefolie auf die Dekorlage erfolgen. Vorzugsweise wird die Dekorlage hierbei nach Auflegen der Ablösefolie mittels Stanzens durchtrennt, wobei die Stanztiefe des Stanzwerkzeuges vorzugsweise so gewählt ist, dass die auf dem Trägerfilm aufliegenden Schichten der Transferfolie sowie die Ablösefolie, jedoch nicht der Trägerfilm selbst, durchtrennt werden. Weiter wird bevorzugt ein kombiniertes Präge-/Stanzwerkzeug eingesetzt, das gleichzeitig die erste Kleberschicht im zweiten Teilbereich aktiviert und die Dekorlage und die Ablösefolie im Grenzbereich zwischen dem ersten und zweiten Teilbereich mindestens bereichsweise durchstanzt.

Nach dem Aktivieren der ersten Kleberschicht und vor dem Abziehen der Ablöseschicht wird gemäss eines weiteren Ausführungsbeispiels der Erfindung eine weitere Folie auf die der Dekorlage abgewandte Seite der Ablösefolie aufgebracht und mittels einer dritten Kleberschicht fixiert. Diese weitere Folie wird sodann zusammen mit der an ihr haftenden Ablösefolie von der Transferlage abgezogen. Mittels des Einsatzes einer solchen weiteren Folie kann das Verfahren insbesondere für diejenigen Ausführungsvarianten verbessert werden, in denen die Ablösefolie in Randbereichen des ersten Teilbereichs mit der Dekorlage durchstanzt wird. Mittels der weiteren Folie werden ausgestanzte Teilbereiche der Ablösefolie gesichert, die Ablösefolie als solche stabilisiert und damit ein sicheres Abziehen der zweiten Teilbereiche der Dekorlage von dem Trägerfilm gewährleistet.

Im weiteren wird die Erfindung anhand von Beispielen unter Zuhilfenahme der beiliegenden Zeichnungen erläutert.
- Fig. 1a bis Fig. 1e: zeigen schematische Darstellungen zur Verdeutlichung verschiedener Verfahrensschritte eines Verfahrens zum Transfer eines Mehrschichtkörpers auf ein Substrat gemäss eines ersten Beispiels zu Vergleichszwecken.
- Fig. 2a und Fig. 2b: zeigen schematische Darstellungen zur Verdeutlichung von Verfahrensschritten eines erfindungsgemässen Verfahrens zum Transfer eines Mehrschichtkörpers auf ein Substrat gemäss eines zweiten Beispiels.
- Fig. 3a bis Fig. 3c: zeigen schematische Darstellungen zur Verdeutlichung von Verfahrensschritten eines Verfahrens zum Transfer eines Mehrschichtkörpers auf ein Substrat gemäss eines weiteren Biespiels zu Vergleichszwecken.

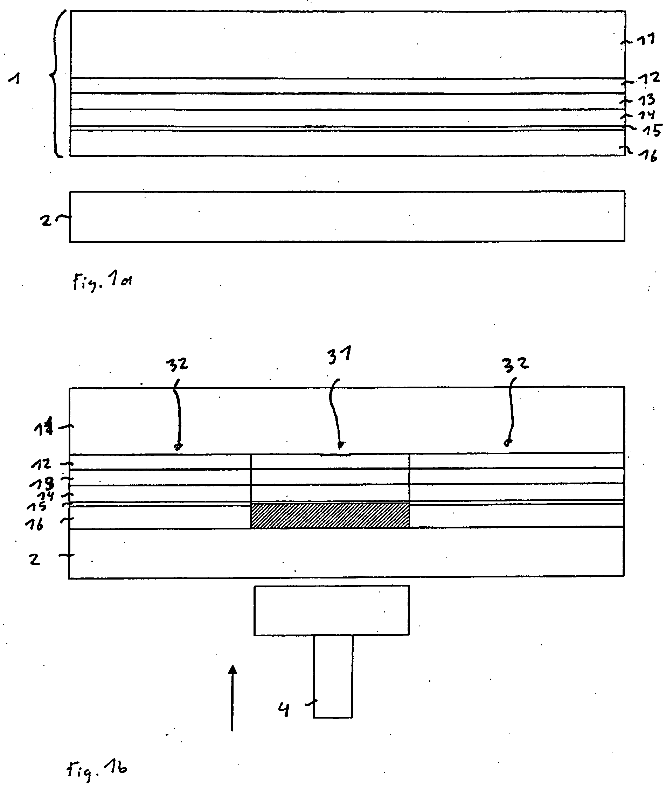

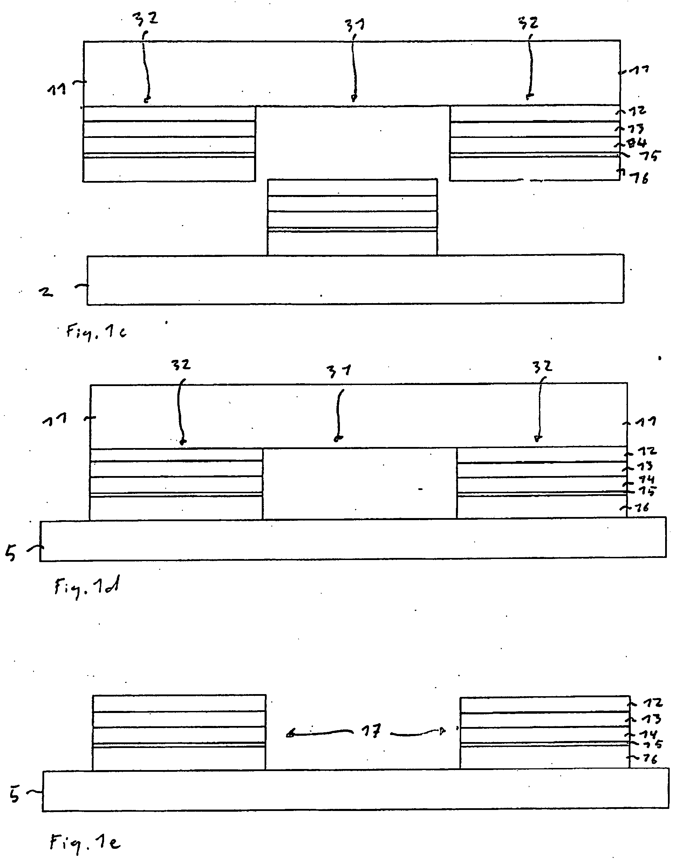

Fig. 1 a zeigt eine Transferfolie 1 und eine Ablösefolie 2. Die Transferfolie 1 besteht hierbei aus einem Trägerfilm 11 und einer mehrschichtigen Dekorlage, die von einer Ablöseschicht 12, einer Schutzlackschicht 13, einer Replizierlackschicht 14, einer Reflexionsschicht 15 und einer Kleberschicht 16 gebildet wird.

Bei dem Trägerfilm 11 handelt es sich vorzugsweise um eine Polyesterfolie einer Stärke von 6 bis 60 µm. Es ist weiter auch möglich, dass der Trägerfilm 11 mehrlagig aufgebaut ist und beispielsweise aus einer Polyesterfolie und einer auf der Polyesterfolie aufkaschierten Papierlage einer Dicke von 30 bis 500 µm besteht.

Auf dem Trägerfilm 11 wird nun die Dekorlage nacheinander durch Aufbringen weiterer Schichten aufgebaut. Hierzu wird zuerst auf den Trägerfilm die Ablöseschicht 12 aufgebracht. Die Ablöseschicht besteht vorzugsweise aus einem wachsartigen Material, welches insbesondere durch die bei einem Heissprägevorgang auftretende Wärme erweicht und ein sicheres Trennen der Dekorlage von dem Trägerfilm 11 ermöglicht. Die Dicke der Ablöseschicht beträgt hierbei etwa 0,3 bis 1,2 µm.

Anschliessend wird die Schutzlackschicht 13 in einer ähnlichen Schichtdicke aufgebracht. Es ist hierbei auch möglich, dass die Schutzlackschicht 13 die Funktion der Ablöseschicht 12 mit übernimmt und demnach sowohl die Trennung der Dekorlage von dem Trägerfilm ermöglicht als auch die Dekorlage vor mechanischen Einwirkungen und Umwelteinflüssen schützt. Eine derartige Ablöse- und Schutzlackschicht könnte wie folgt zusammengesetzt sein:

| Komponenten | Gewichts-Teile |
|---|---|
| Hochmolekulares PMMA-Harz | 2.000 |
| Silikonalkyd, ölfrei | 300 |
| Nichtionisches Netzmittel | 50 |
| Methyläthylketon | 750 |
| Niedrigviskose Nitrozellulose | 12.000 |
| Toluol | 2.000 |
| Diazetonalkohol | 2.500 |

Es ist hierbei auch möglich, dass die Schutzlackschicht 13 eingefärbt ist oder Micro- und Nanopartikel enthält.

Die Replizierlackschicht 13 besteht aus einem thermoplastischen Lack, in den mittels Einwirkung von Hitze und Druck mittels eines Prägewerkzeugs eine diffraktive Oberflächenstruktur repliziert wird. Die Replizierlackschicht hat eine Dicke von ca. 0,5 bis 1,5 µm. Bei der diffraktiven Oberflächenstruktur handelt es sich beispielsweise um ein Hologramm oder Kinegram®, oder um eine sonstige beugungsoptisch aktive Gitterstruktur, die durch Strukturparameter wie Gitterfrequenz, Strukturtiefe, Strukturform und Azimutwinkel bestimmt ist. Die Replizierlackschicht 14 wird vorzugsweise mittels eines Druckverfahrens, beispielsweise einer Tiefdruck-Rasterwalze, vollflächig auf die Schutzlackschicht 13 aufgebracht und sodann in einem Trocknungskanal getrocknet. Anschliessend erfolgt das Replizieren der diffraktiven Oberflächenstruktur mittels eines rotierenden Prägezylinders oder durch Hubprägen. Weiter ist es auch möglich, dass als Replizierlackschicht ein UV-vernetzbarer Lack verwendet wird und die diffraktive Oberflächenstruktur mittels UV-Replikation erzeugt wird.

Anschliessend wird auf die Replizierlackschicht 14 die Reflexionsschicht 25 aufgebracht. Bei der Reflexionsschicht 15 handelt es sich vorzugsweise um eine Metallschicht aus Chrom, Kupfer, Silber oder Gold bzw. entsprechenden Legierungen, die im Vakuum in einer Stärke von 0,01 bis 0,04 µm aufgedampft wird. Weiter ist es auch möglich, anstelle der Reflexionsschicht 15 eine optische Trennschicht aufzubringen. Bei der optischen Trennschicht handelt es sich vorzugsweise um eine HRI- oder LRI-Schicht (HRI = High Refraction Index; LRI = Low Refraction Index), deren Brechungsindex sich deutlich von dem Brechungsindex der Replizierlackschicht 14 unterscheidet, so dass der von der in die Replizierlackschicht eingebrachten diffraktiven Oberflächenstruktur erzeugte beugungsoptische Effekt dem Betrachter sichtbar wird. Die optische Trennschicht wird hierbei beispielsweise von einer aufgedampften Schicht aus einem Metalloxid, Metallsufid, Titandioxid, etc. einer Dicke von 10 bis 50 nm gebildet.

Weiter ist auch möglich, anstelle oder zusätzlich zu den Schichten 13 und 14 in die Dekorlage noch weitere Schichten einzubringen, die einen optisch variablen Effekt generieren. So ist es beispielsweise möglich, ein einen blickwinkelabhängigen Farbverschiebungseffekt erzeugendes Dünnfilmschichtsystem, eine Schicht aus einem vernetzten (cholesterischen) Flüssigkristallmaterial oder eine partiell ausgeführte Metallschicht in der Dekorlage vorzusehen. Weiter kann die Dekorlage ein oder mehrere (eingefärbte) weitere Lackschichten aber auch Stabilisierungsschichten, beispielsweise eine Polyesterfolie einer Dicke von 4 bis 12 µm, umfassen. Weiter ist es auch möglich, dass die Dekorlage ein oder mehrere elektrisch leitfähige oder halbleitende Schichten umfasst, die eine elektrische Schaltung, beispielsweise einen RFID-Tag, realisieren. Auch kann die Dekorschicht ein oder mehrere Schichten aus einem magnetischen Material und einem (elektro-)lumineszenten Material umfassen.

Anschliessend wird auf die Dekorlage die Kleberschicht 16 in einer Schichtdicke von etwa 0,3 bis 5 µm aufgebracht. Die Kleberschicht 16 besteht hierbei aus einem thermisch aktivierbaren Kleber und wird vollflächig beispielsweise mittels eines Rakels auf die Dekorlage aufgebracht.

Bei der Ablösefolie 2 handelt es sich um eine Folie aus einem Papiermaterial, beispielsweise Papiermaterial auf Basis natürlicher oder synthetisch hergestellter Fasern.

Es ist jedoch auch möglich, dass die Ablösefolie 2 aus einem mehrlagigen Folienkörper, beispielsweise bestehend aus einer Polyesterfolie und einer aufkaschierten Papierbahn, besteht.

In einem ersten Schritt wird nun die Ablösefolie 2 auf die Transferfolie 1 aufgelegt. Sodann wird die Kleberschicht 16 in einem Teilbereich der Dekorlage mittels Hitze und Druck aktiviert, so dass eine Haftung zwischen der Dekorlage der Transferfolie 1 und der Ablösefolie 2 bewirkt wird, die grösser als die Haftung zwischen dem Trägerfilm 11 und der Dekorlage ist. So zeigt beispielsweise Fig. 1b die Transferfolie 1 bestehend aus dem Trägerfilm 11, der Ablöseschicht 12, der Schutzlackschicht 13, der Replizierlackschicht 14, der Reflexionsschicht 15 und der Kleberschicht 16, die auf die Ablösefolie 2 aufgelegt ist. Mittels eines Heissprägestempels 4 wird nun in einem Teilbereich 31 die Kleberschicht 16 aktiviert, indem der heisse Prägestempel 4 von Seiten der Ablösefolie 2 gegen den aufeinander liegenden Folienstapel gepresst wird. Weiter ist es auch möglich, dass der Prägestempel 4 von Seiten des Trägerfilms 11 im Bereich 31 gegen den Folienstapel gepresst wird. In einem benachbarten Teilbereich 32 der Dekorlage wird hingegen die Kleberschicht 16 nicht aktiviert.

Eine Aktivierung der Kleberschicht kann weiter auch mittels Laser erfolgen.

Wird nun, wie dies in Fig. 1c gezeigt ist, die Ablösefolie 2 von der Transferfolie 1 abgezogen, so haftet der Teilbereich 31 der Dekorlage, in dem die Kleberschicht 16 aktiviert worden ist, an der Ablösefolie 2 und wird mit dieser von dem Trägerfilm 11 angezogen. In dem Teilbereich 32 der Dekorlage, in dem die Kleberschicht nicht aktiviert worden ist, verbleibt hingegen die aus den Schichten 12 bis 16 gebildete Dekorlage auf dem Trägerfilm 11.

Die auf diese Weise gewonnene, mit einer bereichsweise von dem Trägerfilm 11 abgezogenen Dekorlage versehen Trägerfolie kann nun als Zwischenprodukt gelagert, konfektioniert und zur Weiterverwendung, beispielsweise an Pass-Ausgabestellen, versandt werden. Der Teilbereich 32 der Dekorlage kann hierbei von einfacher geometrischer Gestalt sein und beispielsweise als Sicherheitssiegel zur Produktsicherung, zur Sicherung von Banknoten und Wertdokumenten oder zur Sicherung von Identifikationspapieren wie Firmenausweise und Reisepässe verwendet werden. Es ist jedoch auch möglich, dass der auf dem Trägerfilm 11 verbleibende Teilbereiche 32 der Dekorlage eine komplexere Umrissform besitzt und beispielsweise eine figürliche Umrissform besitzt.

Die durch die oben beschriebenen Verfahrensschritte hergestellte Transferfolie mit den in den Teilbereichen 32 auf dem Trägerfilm 11 vorliegenden Schichten 12 bis 16 wird so beispielsweise in einer Pass-Ausgabestelle - wie dies in Fig. 1d gezeigt ist - auf ein Substrat 5 aufgelegt. Bei dem Substrat 5 handelt es sich beispielsweise um ein Papier- oder Kunststoffsubstrat, das mit einem individualisierten Aufdruck, beispielsweise einem Passbild und persönlichen Daten des Passinhabers, versehen ist.

Anschliessend wird der von der Transferfolie und dem Substrat 5 gebildete Folienstapel in einen Rollenlaminator eingeführt, welcher durch Hitze und Druck die Kleberschicht 16 aktiviert, und den Teilbereich 32 der Dekorlage mittels der Kleberschicht 16 fest mit dem Substrat 5 verbindet. Sodann wird der Trägefilm 11 abgezogen. Wie in Fig. 1e gezeigt, verbleibt damit auf dem Substrat ein Mehrschichtkörper 17, der die Umrissform des Teilbereiches 32 besitzt und aus den Schichten 12 bis 16 aufgebaut ist. Weiter ist es hier auch möglich, dass die Ablöseschicht 12, nicht wie dies in Fig 1e gezeigt ist, mit der Dekorlage von dem Trägerfilm abgelöst wird, sondern auf dem Trägerfilm 11 verbleibt.

Weiter ist es auch möglich, dass das Ablösen nach Aufwickeln und Zwischenlagerung zu einem späteren Zeitpunkt, z.B. kurz vor der Applikation beim Verarbeiter erfolgt.

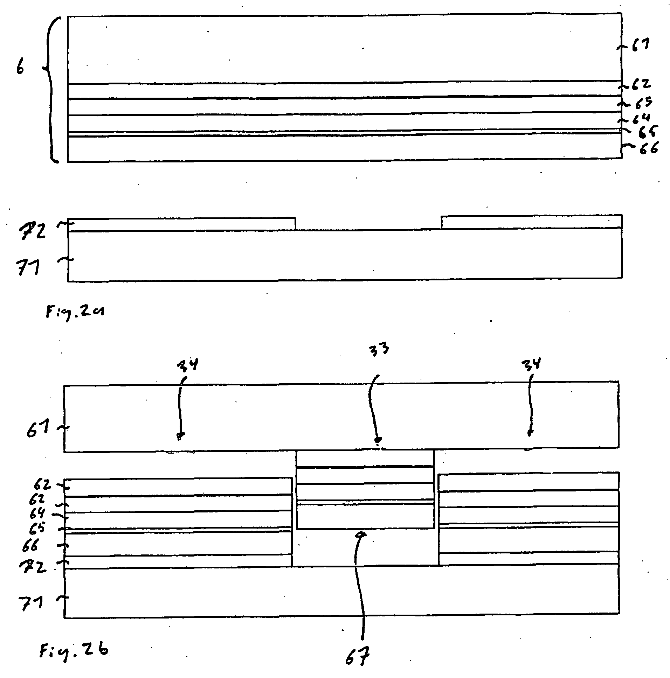

Anhand von Fig. 2a und Fig. 2b wird nun ein Ausführungsbeispiel der Erfindung erläutert.

Fig. 2a zeigt eine Transferfolie 6, die aus einem Trägerfilm 61, einer Ablöseschicht 62, einer Schutzlackschicht 63, einer Replizierlackschicht 64, einer Reflexionsschicht 65 und einer Kleberschicht 66 aufgebaut ist. Die Schichten 61 bis 66 sind hierbei wie die Schichten 11 bis 16 der Transferfolie 1 nach Fig. 1 aufgebaut. Weiter zeigt Fig. 2 eine Ablösefolie 71, auf die beispielsweise mittels einer Tiefdruckrasterwalze eine weitere Kleberschicht 72 partiell aufgebracht worden ist. Bei der Kleberschicht 72 handelt es sich um einen durch Druck aktivierbaren Kaltkleber oder um einen UV-vernetzbaren Kleber. Die Ablösefolie 71 mit der partiellen Kleberschicht 72 wird nun auf die Trägerfolie 6 aufgelegt und sodann die Kleberschicht 72 aktiviert, indem die Ablösefolie 71 auf die Transferfolie 61 aufgepresst wird bzw. nach Auflegen der Ablösefolie 71 der sich ergebende Folienstapel von Seiten der Ablösefolie 71 oder des Trägerfilms 61 mittels einer UV-Lampe vollflächig belichtet wird.

Weiter ist es auch möglich, dass die Kleberschicht 72 aus einem thermisch aktivierbaren Kleber besteht und vollflächig auf die Trägerfolie 71 aufgebracht wird. Die Kleberschicht 72 wird anschliessend durch Ausübung von Hitze und Druck partiell beispielsweise mittels eines Heissprägestempels (sh. Fig. 1 b) aktiviert. Weiter ist es möglich, dass auf die Ablösefolie 71 die Kleberschicht 72 vollflächig aufgebracht wird und anschliessend Teilbereiche der Kleberschicht 72 durch Aufdruck einer als Deaktivierungsschicht dienenden Lackschicht deaktiviert werden. Die Kleberschicht 72 kann in diesem Fall aus einem thermisch aktivierbaren Kleber, einem Kaltkleber oder einem UV-aktivierbaren Kleber bestehen. Nach Auflegen der Ablösefolie 71 auf die Transferfolie 6 wird die Kleberschicht 72 vollflächig durch Hitze, Druck oder UV-Bestrahlung aktiviert, wobei in den Teilbereichen, in denen die Deaktivierungsschicht auf die Kleberschicht 72 aufgedruckt ist, eine Haftung zwischen Dekorlage und Ablösefolie 71 verhindert wird, die grösser als die Haftung zwischen dem Trägerfilm 61 und der Dekorlage ist.

Als Kleber für die Kleberschicht 77 eignet sich ebenfalls Toner, wie er in Drucken verwendet wird. Das Aufbringen der Kleberschicht kann dann ebenfalls mittels eines (Laser-)Druckers erfolgen. Weiter ist es möglich, daß die Kleberschicht 72 mittels eines Inkjet-Druckers aufgebracht wird.

Wie in Fig. 2b gezeigt, wird anschliessend die Ablösefolie 71 von der Trägerfolie 6 abgezogen, wobei in einem Teilbereich 33, in dem die Kleberschicht 72 nicht vorgesehen war, nicht aktiviert worden war oder mittels der Deaktivierungsschicht deaktiviert war, die Dekorlage auf dem Trägerfilm 61 verbleibt und in dem übrigen Teilbereich 34 die aus den Schichten 62 bis 66 bestehende Dekorlage mit der Ablösefolie 71 von dem Trägerfilm 61 abgezogen wird.

Die so hergestellte Transferfolie kann nun dazu verwendet werden, in analoger Weise wie die Transferfolie nach Fig. 1d einen von dem Teilbereich 33 der Dekorlage gebildeten Mehrschichtkörper 67 auf ein Substrat zu applizieren.

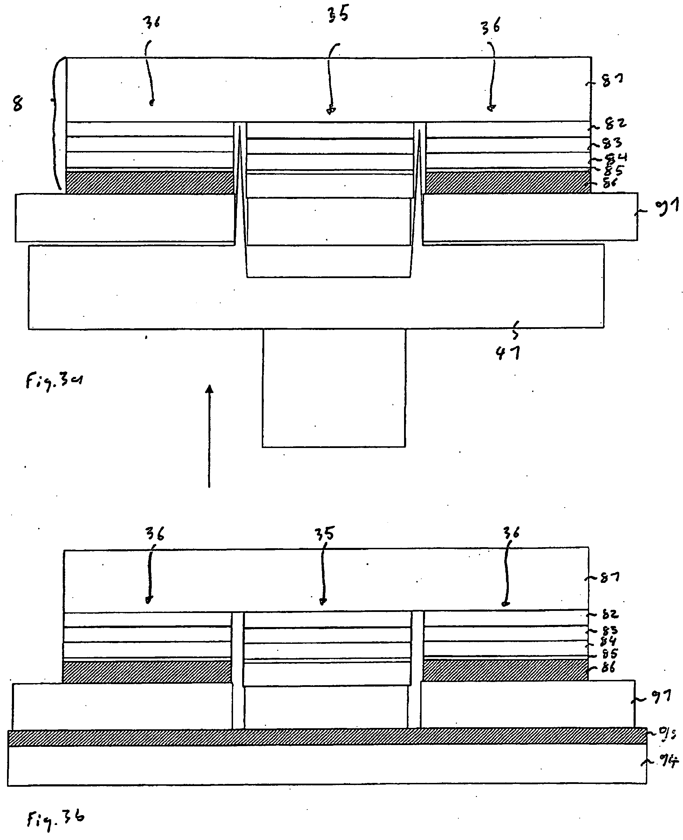

Ein weiteres Beispiel zu Vergleichszwecken wird nun anhand von Fig. 3a bis Fig. 3c erläutert.

Fig. 3a zeigt eine Transferfolie 8, die einen Trägerfilm 81, eine Ablöseschicht 82, eine Schutzlackschicht 83, eine Replizierlackschicht 84, eine Reflexionsschicht 85 und eine Kleberschicht 86 umfasst. Die Schichten 81 bis 86 sind hierbei entsprechend den Schichten 11 bis 16 nach Fig. 1a ausgestaltet.

Die Transferfolie 8 wird nun auf eine Ablösefolie 91 aufgelegt, die beispielsweise von einer mit der Transferfolie 8 in Überdeckung gebrachten Papierbahn gebildet wird. Anschliessend wird mittels eines Werkzeugs 41 die Kleberschicht 86 in Teilbereichen 36 der Dekorlage aktiviert und gleichzeitig mittels dieses Werkzeuges die Grenzbereiche zwischen dem Teilbereich 36 und einem Teilbereich 35 zumindest bereichsweise durchstanzt. Bei dem Werkzeug 41 handelt es sich um einen speziell ausgestalteten Heissprägestempel, der im Bereich dieser Randbereiche mit messartigen Fortsätzen versehen ist, welche die Ablösefolie 91 und die darunter liegende Transferlage de Transferfolie 8 durchtrennen. Die Stanztiefe ist hierbei derart gewählt, dass die Dekorlage der Transferfolie zumindest teilweise durchtrennt wird, der Trägerfilm 81 jedoch nicht durchstanzt wird und zumindest noch über ausreichende Eigenstabilität verfügt, um ein sicheres Ablösen der Ablösefolie 91 von der Transferfolie 8 zu gewährleisten. Wie in Fig. 3a dargestellt, verfügt das Werkzeug 41 in dem Teilbereich 36 über Stempelflächen, die eine dem Teilbereich 36 entsprechende Formgebung besitzen und beim Aufpressen des Werkzeuges 41 auf den Folienstapel eine Aktivierung der Kleberschicht 86 durch Hitze und Druck bewirken. In dem angrenzenden Randbereich sind rillen- oder dornenförmige Schneidefortsätze vorgesehen, die eine zumindest bereichsweise Durchtrennung der Dekorlage beim Heissprägevorgang gewährleisten. In dem von dem Teilbereich 36 begrenzten Teilbereich 35 wird die Kleberschicht 86 durch das Werkzeug 41 nicht aktiviert.

Besonders vorteilhaft ist es hierbei, wenn die Ablösefolie 91 durch das Werkzeug 41 in dem Randbereich zwischen den Teilbereichen 65 und 36 nicht vollständig durchtrennt wird, d.h. nicht vollständig als Marke ausgestanzt wird und noch über ein oder mehrere Stege mit dem übrigen Bereich der Ablösefolie verbunden bleibt.

In einem nächsten Schritt kann nun die Ablösefolie 91 mit dem Teilbereich 36 der Dekorlage, in dem die Kleberschicht 86 aktiviert ist und damit an der Ablösefolie 91 haftet, von dem Trägerfilm 81 abgezogen werden.

Besonders vorteilhaft ist es jedoch, vor dem Abziehen der Ablösefolie 91 eine weitere Folie 94 auf die der Dekorlage abgewandten Seite der Ablösefolie 91 aufzubringen und mittels einer Kleberschicht 93 mit der Ablösefolie 91 zu verkleben. Bei der Folie 94 handelt es sich hierbei vorzugsweise um eine Folie aus einem Papiermaterial, beispielsweise um eine weitere Papierbahn, die in Überdeckung mit der Ablösefolie 91 gebracht wird und die vollflächig mit einer die Kleberschicht 93 bildenden Kaltkleberschicht versehen ist. Die Folie 94 wird sodann gegen die Ablösefolie 91 gepresst, wodurch die Kleberschicht 93 aktiviert wird und die Ablösefolie 91 mit der Folie 94 verklebt wird.

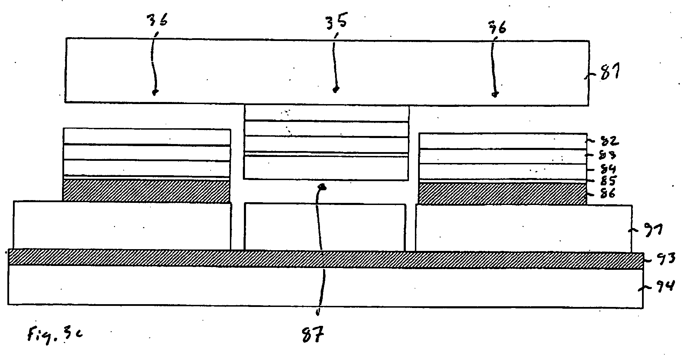

Anschliessend wird, wie in Fig. 3c gezeigt, die Ablösefolie 91 zusammen mit der Folie 94 von der Transferfolie 8 abgezogen, wobei der Teilbereich 36 der Dekorlage an der Ablösefolie 91 haftet und mit der Ablösefolie von dem Trägerfilm 81 abgezogen wird.

Durch die Folie 94 wird hierbei einerseits ein sicheres Abziehen der Ablösefolie 91 von der Transferfolie 8 gewährleistet, selbst wenn die Ablösefolie 91 grossflächig von dem Werkzeug 41 durchstanzt worden ist. Weiter wird auf diese Weise sicher gestellt, dass keine ausgestanzten Teilstücke der Ablösefolie 91 nach Abziehen der Transferfolie 91 auf der Transferfolie verbleiben und den weiteren Applikationsprozess behindern können.

Nach Abziehen der Ablösefolie 91 liegt somit eine Transferfolie mit dem Teilbereich 35 der Dekorlage vor, der als Mehrschichtkörper 87, wie anhand von Fig. 1d und Fig. 1e erläutert, auf ein Substrat appliziert werden kann.

## Patentansprüche

1. Verfahren zum Transfer eines Mehrschichtkörpers (17, 67, 87) auf ein Substrat (5), wobei bei dem Verfahren eine Transferfolie (1, 6, 8) bereitgestellt wird, die einen Trägerfilm (11, 61, 81), eine ein- oder mehrschichtige Dekorlage und eine Ablöseschicht (12, 62, 82) aufweist, die die Trennung der Dekorlage von dem Trägerfilm ermöglicht, und bei dem ein den Mehrschichtkörper (17, 67, 87) bildender erster Teilbereich (32, 33, 35) der Dekorlage auf das Substrat (5) appliziert wird, wobei die Transferfolie (1, 6, 8) und eine Ablösefolie (2, 71, 91) aufeinander gelegt werden, wobei eine zwischen Dekorlage und Ablösefolie (2, 71, 91) angeordnete erste Kleberschicht (16, 72, 86) in dem ersten Teilbereich der Dekorlage und einem zweiten Teilbereich (31, 32, 35, 36) der Dekorlage, der an einen dem Mehrschichtkörper zugeordneten ersten Teilbereich der Dekorlage angrenzt, vollflächig auf die Dekorlage aufgebracht wird, sodann partiell in dem zweiten Teilbereich (31, 34, 36) der Dekorlage aktiviert wird und in dem ersten Teilbereich (32, 33, 35) der Dekorlage jedoch mittels Überdrucken mit einer Deaktivierungsschicht oder mittels Bestrahlung deaktiviert wird, dass die Ablösefolie (2, 71, 91) von der Transferfolie (1, 6, 8) anschließend abgezogen wird, wobei der zweite Teilbereich (31, 34, 36) der Dekorlage, in dem die erste Kleberschicht (16, 72, 86) aktiviert ist, an der Ablösefolie haftet und mit der Ablösefolie (2, 71, 91) von dem Trägerfilm (11, 61, 81) abgezogen wird und der erste Teilbereich (32, 33, 35) der Dekorlage auf dem Trägerfilm (11, 61, 81) verbleibt, und dass die Transferfolie (1, 6, 8) auf das Substrat (5) aufgelegt und der nicht mit der Ablösefolie von dem Trägerfilm abgelöste erste Teilbereich (32, 33, 35) der Dekorlage zumindest bereichsweise auf das Substrat (5) appliziert wird.

2. Verfahren nach Anspruch 1,
**dadurch gekennzeichnet,**
**dass** als Ablösefolie (2, 71, 91) eine Folie aus einem Papiermaterial verwendet wird.

3. Verfahren nach einem der vorhergehenden Ansprüche,
**dadurch gekennzeichet,**
dass die Ablösefolie (71) mittels zweier gegenüberliegender Rollen auf die Transferfolie (6) auflaminiert wird.

4. Verfahren nach einem der vorhergehenden Ansprüche,
**dadurch gekennzeichnet,**
**dass** zwischen Dekorlage und Ablösefolie (71) neben der ersten Kleberschicht (72) eine zweite Kleberschicht (66) vorgesehen wird.

5. Verfahren nach Anspruch 4,
**dadurch gekennzeichnet,**
**dass** die zweite Kleberschicht (66) auf die Dekorlage und die erste Kleberschicht (72) auf die Ablösefolie (71) aufgebracht werden.

6. Verfahren nach Anspruch 4,
**dadurch gekennzeichnet,**
**dass** zuerst die zweite Kleberschicht auf die Dekorlage aufgebracht und dann die erste Kleberschicht auf die zweite Kleberschicht aufgebracht wird.

7. Verfahren nach einem der Ansprüche 4 bis 6,
**dadurch gekennzeichnet,**
**dass** für die erste Kleberschicht (72) und die zweite Kleberschicht (66) unterschiedliche Kleber verwendet werden.

8. Verfahren nach Anspruch 7,
**dadurch gekennzeichnet,**
**dass** als erste und zweite Kleberschicht Heisskleber verwendet werden, die unterschiedliche Aktivierungstemperaturen besitzen, wobei die Aktivierungstemperatur der ersten Kleberschicht geringer als die der zweiten Kleberschicht ist.

9. Verfahren nach Anspruch 7,
**dadurch gekennzeichnet,**
**dass** für die erste Kleberschicht (72) ein Kaltkleber und für die zweite Kleberschicht (66) ein Heisskleber verwendet wird.

10. Verfahren nach einem der vorhergehenden Ansprüche,
**dadurch gekennzeichnet,**
**dass** die Dekorlage in dem Bereich durchtrennt wird, in dem der erste und der zweite Teilbereich (36, 35) aneinander grenzen.

11. Verfahren nach Anspruch 10,
**dadurch gekennzeichnet,**
**dass** die Dekorlage mittels Stanzens getrennt wird.

12. Verfahren nach Anspruch 11,
**dadurch gekennzeichnet,**
**dass** die Dekorlage mit einem Heissprägestempel (41) bearbeitet wird, der gleichzeitig die erste Kleberschicht (86) im zweiten Teilbereich (36) aktiviert und die Dekorlage und die Ablösefolie (71) in dem Grenzbereich zwischen erstem und zweitem Teilbereich (33, 34) mindestens bereichsweise durchstanzt.

13. Verfahren nach einem der vorhergehenden Ansprüche,
**dadurch gekennzeichnet,**
**dass** nach dem Aktivieren der ersten Kleberschicht (86) und vor dem Abziehen der Ablöseschicht (91) eine mit einer dritten Kleberschicht (93) versehene weitere Folie (94) auf die der Dekorlage abgewandten Seite der Ablösefolie (91) aufgebracht wird, die dritte Kleberschicht (93) aktiviert wird und sodann die Ablösefolie (91) mit der an dieser haftenden weiteren Folie (94) von der Dekorlage abgezogen wird.

14. Verfahren zur Herstellung einer Transferfolie, die den Transfer eines
Mehrschichtkörpers (17, 67, 87) auf ein Substrat (5) ermöglicht, wobei bei dem Verfahren eine Grundfolie bereitgestellt wird, die einen Trägerfilm (11, 61, 81), eine ein- oder mehrschichtige Dekorlage und eine Ablöseschicht (12, 62, 82) aufweist, die die Trennung der Dekorlage von dem Trägerfilm ermöglicht, und bei dem ein erster Teilbereich (32, 33, 35) der Dekorlage den zu transferierenden Mehrschichtkörper bildet, wobei die Grundfolie und eine Ablösefolie (2, 71, 91) aufeinander gelegt werden, wobei
eine zwischen Dekorlage und Ablösefolie angeordnete erste Kleberschicht (16, 72, 86) in dem ersten Teilbereich der Dekorlage und einem zweiten Teilbereich (31, 32, 35, 36) der Dekorlage, der an einen dem Mehrschichtkörper zugeordneten ersten Teilbereich der Dekorlage angrenzt, vollflächig auf die Dekorlage aufgebracht wird, sodann partiell in dem zweiten Teilbereich (31, 34, 36) der Dekorlage aktiviert wird und in dem ersten Teilbereich (32, 35, 36) der Dekorlage jedoch mittels Überdrucken mit einer Deaktivierungsschicht oder mittels Bestrahlung deaktiviert wird, und dass die Ablösefolie (2, 71, 91) anschließend von der Grundfolie abgezogen wird, wobei der zweite Teilbereich (31, 34, 36) der Dekorlage, in dem die erste Kleberschicht (16, 72, 86) aktiviert ist, an der Ablösefolie haftet und mit der Ablösefolie von dem Trägerfilm (11, 61, 81) abgezogen wird und der erste Teilbereich (32, 33, 35) der Dekorlage auf dem Trägerfilm (11, 61, 81) verbleibt.

15. Transferfolie, insbesondere Heissprägefolie, zum Transfer eines Mehrschichtkörpers (17, 67, 87) auf ein Substrat (5), wobei die Transferfolie einen Trägerfilm (11. 61, 81), eine ein- oder mehrschichtige Dekorlage und eine Ablöseschicht (12, 62, 82) aufweist, die die Trennung der Dekorlage von dem Trägerfilm ermöglicht, und wobei die Transferfolie gemäss dem Verfahren nach Anspruch 14 hergestellt ist.

## Claims

1. Method for transferring a multilayer body (17, 67, 87) onto a substrate (5), wherein, in the method, a transfer film (1, 6, 8) is provided which has a carrier film (11, 61, 81), a single- or multilayer decorative layer and a release layer (12, 62, 82) which enables the separation of the decorative layer from the carrier film, and in which a first partial region (32, 33, 35) of the decorative layer, said partial region forming the multilayer body (17, 67, 87), is applied to the substrate (5), wherein the transfer film (1, 6, 8) and a release film (2, 71, 91) are laid one on top of the other, wherein
a first adhesive layer (16, 72, 86) arranged between the decorative layer and release film (2, 71, 91) is applied in full to the decorative layer in the first partial region of the decorative layer and in a second partial region (31, 32, 35, 36) of the decorative layer, said partial region adjoining a first partial region of the decorative layer allocated to the multilayer body, then is partially activated in the second partial region (31, 34, 36) of the decorative layer and is, however, deactivated in the first partial region (32, 33, 35) of the decorative layer by means of overprinting with a deactivation layer or by means of irradiation, the release film (2, 71, 91) is subsequently removed from the transfer film (1, 6, 8), wherein the second partial region (31, 34, 36) of the decorative layer, in which the first adhesive layer (16, 72, 86) is activated, adheres to the release film and is removed from the carrier film (11, 61, 81) along with the release film (2, 71, 91), and the first partial region (32, 33, 35) of the decorative layer remains on the carrier film (11, 61, 81), and the transfer film (1, 6, 8) is applied to the substrate (5) and the first partial region (32, 33, 35) of the decorative layer, said partial region not having been removed from the carrier film along with the release film, is applied to the substrate (5) at least in certain regions.

2. Method according to claim 1,
**characterised in that**
a film made from a paper material is used as the release film (2, 71, 91).

3. Method according to one of the preceding claims,
**characterised in that**
the release film (71) is laminated onto the transfer film (6) by means of two opposite rolls.

4. Method according to one of the preceding claims,
**characterised in that**
a second adhesive layer (66) is provided between the decorative layer and the release film (71) as well as the first adhesive layer (72).

5. Method according to claim 4,
**characterised in that**
the second adhesive layer (66) is applied to the decorative layer and the first adhesive layer (72) is applied to the release film (71).

6. Method according to claim 4,
**characterised in that**
the second adhesive layer is firstly applied to the decorative layer and then the first adhesive layer is applied to the second adhesive layer.

7. Method according to one of claims 4 to 6,
**characterised in that**
different adhesives are used for the first adhesive layer (72) and the second adhesive layer (66).

8. Method according to claim 7,
**characterised in that**
hot adhesives are used as the first and second adhesive layer, said hot adhesives possessing different activation temperatures, wherein the activation temperature of the first adhesive layer is lower than that of the second adhesive layer.

9. Method according to claim 7,
**characterised in that**
a cold adhesive is used for the first adhesive layer (72) and a hot adhesive is used for the second adhesive layer (66).

10. Method according to one of the preceding claims,
**characterised in that**
the decorative layer is severed in the region in which the first and the second partial regions (36, 35) adjoin each other.

11. Method according to claim 10,
**characterised in that**
the decorative layer is separated by means of punching.

12. Method according to claim 11,
**characterised in that**
the decorative layer is processed with a hot embossing stamp (41) which simultaneously activates the first adhesive layer (86) in the second partial region (36) and punches through the decorative layer and the release film (71) in the border region between the first and second partial region (33, 34), at least in certain regions.

13. Method according to one of the preceding claims,
**characterised in that**
after the activation of the first adhesive layer (86), and before the removal of the release layer (91), a further film (94) that is provided with a third adhesive layer (93) is applied to the side of the release film (91) that is facing away from the decorative layer, the third adhesive layer (93) is activated and then the release film (91) having the further film (94) adhered to it is removed from the decorative layer.

14. Method for the production of a transfer film which enables the transfer of a multilayer body (17, 67, 87) onto a substrate (5), wherein, in the method, a base film is provided which has a carrier film (11, 61, 81), a single- or multilayer decorative layer and a release layer (12, 62, 82) which enables the separation of the decorative layer from the carrier film, and in which a first partial region (32, 33, 35) of the decorative layer forms the multilayer body that is to be transferred, wherein the base film and a release film (2, 71, 91) are laid one on top of the other, wherein
a first adhesive layer (16, 72, 86) arranged between the decorative layer and release layer is applied in full to the decorative layer in the first partial region of the decorative layer and in a second partial region (31, 32, 35, 36) of the decorative layer, said partial region adjoining a first partial region of the decorative layer allocated to the multilayer body, then is partially activated in the second partial region (31, 34, 36) of the decorative layer and is, however, deactivated in the first partial region (32, 35, 36) of the decorative layer by means of overprinting with a deactivation layer or by means of irradiation, and the release film (2, 71, 91) is subsequently removed from the base film, wherein the second partial region (31, 34, 36) of the decorative layer, in which the first adhesive layer (16, 72, 86) is activated, adheres to the release film and is removed from the carrier film (11, 61, 81) along with the release film, and the first partial region (32, 33, 35) of the decorative layer remains on the carrier film (11,61, 81).

15. Transfer film, in particular hot embossing film, for transferring a multilayer body (17, 67, 87) onto a substrate (5), wherein the transfer film has a carrier film (11, 61, 81), a single-or multilayer decorative layer and a release layer (12, 62, 82) which enables the separation of the decorative layer from the carrier film, and wherein the transfer film is produced according to the method according to claim 14.

## Revendications

1. Procédé servant au transfert d'un corps multicouche (17, 67, 87) sur un substrat (5), sachant qu'est fourni lors du procédé un film de transfert (1, 6, 8), qui présente un film de support (11, 61, 81), une strate de décoration mono- ou multicouche et une couche décollable (12, 62, 82), qui permet la séparation de la strate de décoration du film de support, et dans le cadre duquel une première zone partielle (32, 33, 35), formant le corps multicouche (17, 67, 87), de la strate de décoration est appliquée sur le substrat (5), sachant que le film de transfert (1, 6, 8) et un film décollable (2, 71, 91) sont placés l'un sur l'autre, sachant
qu'une première couche adhésive (16, 72, 86) disposée entre la strate de décoration et le film décollable (2, 71, 91) est appliquée sur toute la surface de la strate de décoration dans la première zone partielle de la strate de décoration et dans une deuxième zone partielle (31, 32, 35, 36) de la strate de décoration, qui jouxte une première zone partielle, associée au corps multicouche, de la strate de décoration dès lors que l'on procède à l'activation en partie dans la deuxième zone partielle (31, 34, 36) de la strate de décoration et que l'on procède à la désactivation dans la première zone partielle (32, 33, 35) de la strate de décoration toutefois au moyen d'une surpression à l'aide d'une couche de désactivation ou au moyen d'une exposition à un rayonnement, sachant que le film décollable (2, 71, 91) est retiré immédiatement après du film de transfert (1, 6, 8), sachant que la deuxième zone partielle (31, 34, 36) de la strate de décoration, dans laquelle la première couche adhésive (16, 72, 86) est activée, adhère au film décollable et est retirée du film de support (11, 61, 81) à l'aide du film décollable (2, 71, 91) et que la première zone partielle (32, 33, 35) de la strate de décoration reste sur le film de support (11, 61, 81), et sachant que le film de transfert (1, 6, 8) est placé sur le substrat (5) et que la première zone partielle (32, 33, 35), décollée du film de support non pas à l'aide du film décollable, de la strate de décoration, est appliquée au moins par endroits sur le substrat (5).

2. Procédé selon la revendication 1,
**caractérisé en ce**
**qu'**un film composé d'un matériau en papier est utilisé en tant que film décollable (2, 71, 91).

3. Procédé selon l'une quelconque des revendications précédentes,
**caractérisé en ce**
**que** le film décollable (71) est appliqué par lamination sur le film de transfert (6) au moyen de deux rouleaux se faisant face.

4. Procédé selon l'une quelconque des revendications précédentes,
**caractérisé en ce**
**qu'**une deuxième couche adhésive (66) est prévue entre la strate de décoration et le film décollable (71) à côté de la première couche adhésive (72).

5. Procédé selon la revendication 4,
**caractérisé en ce**
**que** la deuxième couche adhésive (66) est appliquée sur la strate de décoration et la première couche adhésive (72) est appliquée sur le film décollable (71).

6. Procédé selon la revendication 4,
**caractérisé en ce**
**que** dans un premier temps la deuxième couche adhésive est appliquée sur la strate de décoration, puis en ce que la première couche adhésive est appliquée sur la deuxième couche adhésive.

7. Procédé selon l'une quelconque des revendications 4 à 6,
**caractérisé en ce**
**que** des colles différentes sont utilisées pour la première couche adhésive (72) et la deuxième couche adhésive (66).

8. Procédé selon la revendication 7,
**caractérisé en ce**
**que** sont utilisées en tant que première et deuxième couche adhésive des colles à chaud, qui possèdent des températures d'activation différentes, sachant que la température d'activation de la première couche adhésive est inférieure à celle de la deuxième couche adhésive.

9. Procédé selon la revendication 7,
**caractérisé en ce**
**qu'**une colle à froid est utilisée pour la première couche adhésive (72), et en ce qu'une colle à chaud est utilisée pour la deuxième couche adhésive (66).

10. Procédé selon l'une quelconque des revendications précédentes,
**caractérisé en ce**
**que** la strate de décoration est séparée dans la zone, dans laquelle la première et la deuxième zone partielle (36, 35) se jouxtent l'une à l'autre.

11. Procédé selon la revendication 10,
**caractérisé en ce**
**que** la strate de décoration est séparée au moyen d'un estampage.

12. Procédé selon la revendication 11,
**caractérisé en ce**
**que** la strate de décoration est usinée à l'aide d'une matrice à chaud (41), laquelle active dans le même temps la première couche adhésive (86) dans la deuxième zone partielle (36) et poinçonne au moins par endroits la strate de décoration et le film décollable (71) dans la zone limite entre la première et la deuxième zone partielle (33, 34).

13. Procédé selon l'une quelconque des revendications précédentes,
**caractérisé en ce**
**qu'**un autre film (94) pourvu d'une troisième couche adhésive (93) est appliqué sur le côté, opposé à la strate de décoration, du film décollable (91) après l'activation de la première couche adhésive (86) et avant le retrait de la couche décollable (91), en ce que la troisième couche adhésive (93) est activée, et en ce que le film décollable (91) est dès lors retiré de la strate de décoration à l'aide de l'autre film (94) adhérant au niveau dudit film décollable.

14. Procédé servant à fabriquer un film de transfert, qui permet le transfert d'un corps multicouche (17, 67, 87) sur un substrat (5), sachant que dans le cas du procédé, un film de base est fourni, qui présente un film de support (11, 61, 81), une strate de décoration mono- ou multicouche et une couche décollable (12, 62, 82), qui permet la séparation de la strate de décoration du film de support, et dans le cadre duquel une première zone partielle (32, 33, 35) de la strate de décoration forme le corps multicouche à transférer, sachant que le film de base et un film décollable (2, 71, 91) sont placés l'un sur l'autre, sachant
qu'une première couche adhésive (16, 72, 86) disposée entre la strate de décoration et le film décollable est appliquée sur toute la surface de la strate de décoration dans la première zone partielle de la strate de décoration et dans une deuxième zone partielle (31, 32, 35, 36) de la strate de décoration, qui jouxte une première zone partielle, associée au corps multicouche, de la strate de décoration dès lors qu'on procède en partie à l'activation dans la deuxième zone partielle (31, 34, 36) de la strate de décoration et qu'on procède à la désactivation dans la première zone partielle (32, 35, 36) de la strate de décoration toutefois au moyen d'une surpression à l'aide d'une couche de désactivation ou au moyen de l'exposition à un rayonnement, et sachant que le film décollable (2, 71, 91) est retiré immédiatement après du film de base, sachant que la deuxième zone partielle (31, 34, 36) de la strate de décoration, dans laquelle la première couche adhésive (16, 72, 86) est activée, adhère au film décollable et est retirée du film de support (11, 61, 81) à l'aide du film décollable et sachant que la première zone partielle (32, 33, 35) de la strate de décoration reste sur le film de support (11, 61, 81).

15. Film de transfert, en particulier film d'estampage à chaud, servant au transfert d'un corps multicouche (17, 67, 87) sur un substrat (5), sachant que le film de transfert présente un film de support (11, 61, 81), une strate de décoration mono- ou multicouche et une couche décollable (12, 62, 82), qui permet la séparation de la strate de décoration du film de support, et sachant que le film de transfert est fabriqué selon le procédé selon la revendication 14.
